Europäisches Patentamt

**European Patent Office**

Office européen des brevets

(11) Publication number: **0 241 308**

**A1**

(12) **EUROPEAN PATENT APPLICATION**

(21) Application number: **87303165.2**

(22) Date of filing: **10.04.87**

(51) Int. Cl.³: **B 01 D 57/02**
**B 01 D 35/06, B 01 D 13/02**

(30) Priority: **11.04.86 US 851065**

(43) Date of publication of application:
**14.10.87 Bulletin 87/42**

(84) Designated Contracting States:
**AT BE CH DE ES FR GB GR IT LI LU NL SE**

(71) Applicant: **DORR-OLIVER INCORPORATED**
**Corporate Headquarters 77, Havemeyer Lane P.O. Box 9312**
**Stamford Connecticut 06904(US)**

(72) Inventor: **Vaccare, Paul J.**
**22 Parker Avenue**
**Stamford, CT 06906(US)**

(74) Representative: **Lawson, David Glynne et al,**
**MARKS & CLERK 57-60 Lincoln's Inn Fields**
**London WC2A 3LS(GB)**

(54) Method of removing selected ions from cakes deposited on an EAVF device.

(57) A method for removing or displacing selected ions from a cake formed of solids of suspension by an Electrically Augmented Vacuum Filter (EAVF). The removal or displacement of ions from the cake has the effect of altering the properties of the solids of suspension which are deposited as a cake on an electrode of the EAVF device. The removal or displacement of ions from a cake according to the present invention is accomplished by use of selected ion-pervious, liquid-pervious or impervious, membranes together with selected electrolytes or combination of electrolytes. This is particularly useful for removal of solium ions from cakes of bentonite clay and alumina, as well as the removal of chloride ions from cakes of titanium dioxide.

F I G. 1 (Alumina)

1

METHOD OF REMOVING SELECTED IONS FROM CAKES DEPOSITED ON AN EAVF
DEVICE

BACKGROUND OF THE INVENTION

The present invention provides a highly effective method for
removing or displacing selected ions from a cake formed of solids
from suspension by an EAVF device.  The removal or displacement
of ions from the cake has the phenomena of altering the
properties of the solids of suspension which are deposited as a
cake on an electrode of the EAVF device which permits
diversification of the application of such a device.  The removal
or displacement of ions from a cake according to the present
invention is accomplished by use of selected ion pervious, and
liquid pervious or liquid impervious, membranes together with
selected electrolytes.  The present invention is particularly
useful for removal of sodium ions from cakes of bentonite clay
and alumina, as well as the removal of chloride ions from cakes
of titanium dioxide.

The use of an electrically augmented vacuum filter
(hereinafter referred to as "EAVF") device for dewatering a
suspension of solids in a carrier liquid is broadly described in
U.S. Patent Nos. 4,168,222 and 4,207,158.  These patents describe
a means for dewatering a suspension of solids in an electric
field which is controllably maintained between opposing
electrodes, to cause the solids to migrate relative to the carrier liquid to form a layer or cake on one of the electrode structures in which the electrode element is positioned within ion-pervious walls and submerged in a selected electrolyte, while allowing carrier liquid to be withdrawn under vacuum in the _ opposite direction through the liquid-pervious wall of a hollow, counter electrode structure. A unique double chambered electrode structure which can also be used in the present invention is fully described in pending U.S. Patent Application Serial No. 738,198, EP-A-202955 (86303974.9)

Recently, ion selective membranes have been disposed at the cake forming electrode for the purpose of reducing the contamination of the electrolyte and the bath due to the hydraulic impermeability of these membranes, while permitting continued electrophoretic and electroosmotic effects resulting in the formation of a cake at either the cathode or anode.

It has recently been discovered that in some applications certain ions accompany the solids of suspension in forming the cake and it has become more and more desirable to remove such ions from the cake. Furthermore, it has also become desirable in some instances to replace selected ions in the cake with selected ions from an electrolyte resulting in changing the property and composition of the formed cake thus enabling the EAVF device to be utilized in developing new compositions.

The art of exchanging ions has been documented in prior art, such as Electrodiaylsis. The distinguishing factor between this invention and the prior art is the cake of solids that is formed. This invention deals primarily with the exchange of ions between the dissolved salts of the bath and electrolyte, and the adsorbed ionic species on a given solid particle. To impart different physical properties to a substance, different ions can be adsorbed to a surface of a particle as another ion is being desorbed from the surface. This phenomenon occurs because of the equilibrium that exists between the particle's surface and the bulk liquid about that surface.

The present inventor has developed a method for removing or displacing selected ions from cakes formed at an electrode structure of an EAVF device by means as described below.

SUMMARY OF THE INVENTION

It is a primary object of the present invention to provide a method for either displacing or removing selected ions from the cake of solids of suspension deposited on an electrode structure of an EAVF apparatus, wherein the electrode structure upon which the cake is formed has a membrane wall having ion-permeable, liquid permeable or impermeable, characteristics such that either ions from the electrolyte solution can pass through the membrane wall displacing selected ions from the cake or ions from the cake may be removed by transporting the ions across the membrane wall

into the electrolyte solution. The electrode structure upon which a cake is formed may be either anodic or cathodic depending on the properties of the solids of suspension.

It is also an object of the present invention whereby a series of anodic and cathodic electrodes may be disposed intermittently in order to increase the productivity of the EAVF device.

According to the present invention, if the electrode structure upon which the cake is formed is anodic, and it is desirable to displace selected ions in the cake, then the membrane wall of that electrode structure must be selected from the group consisting of cation selective membranes and non-ion selective membranes. Furthermore, the electrolyte solution can be one selected from the group consisting of: $(NH_4)_2CO_3$; $K_2SO_4$; $Na_2SO_4$; any other salt compositions; and any combination of salts or electrolytes.

If the cake forming electrode structure is cathodic then either anion selective membranes or non-ion selective membranes may be utilized as the membrane wall of that electrode structure.

Additionally, it is an object the present invention that when it is desirable to remove selected ions from a cake of solids of suspension it is desirable to utilize a membrane wall at the cake forming electrode which permits passage there through of the selected ions from the cake into the electrolyte solution. If the cake forming electrode structure is anodic, it is desirable to utilize a membrane wall selected from the group of anion selective membranes. If, however, a cake forming electrode is cathodic, then it would be desirable to utilize a membrane wall selected from the group consisting of cation selective membranes.

The present invention may also include many additional features which shall be further described below.

BRIEF DESCRIPTION OF THE DRAWINGS

FIG. 1 is a schematic representation of an EAVF device according to the present invention having a cake of alumina deposited on the anodic electrode structure;

FIG. 2 is a schematic representation of an EAVF device according to the present invention having a cake of bentonite formed at the anodic electrode structure;

FIG. 3 is a schematic representation of an'EAVF device according to the present invention having a cake of titanium dioxide deposited at the cathodic electrode structure;

FIG. 4 is a schematic representation of an EAVF device according to the present invention having a cake of titanium dioxide deposited at the cathodic electrode structure;

FIG. 5 is a schematic representation of an EAVF device according to the present invention having a cake of titanium dioxide deposited at a cathodic electrode structure;

FIG. 6 is a schematic representation of another embodiment according to the present invention whereby a cation selective membrane is applied as the membrane wall at the anodic structure; and

FIG. 7 is a schematic representation of another embodiment according to the present invention wherein an anionic selective membrane is applied as the membrane wall at the anodic structure.

## DESCRIPTION OF THE PREFERRED EMBODIMENT

The present invention provides a method for either displacing or removing selected ions from a cake of solids from suspension deposited on an electrode structure of an EAVF apparatus. This is accomplished by selectively choosing particular membranes at the cake forming electrode having desired ion exchange properties in conjunction with selection of preferable electrolytes or combinations of electrolytes.

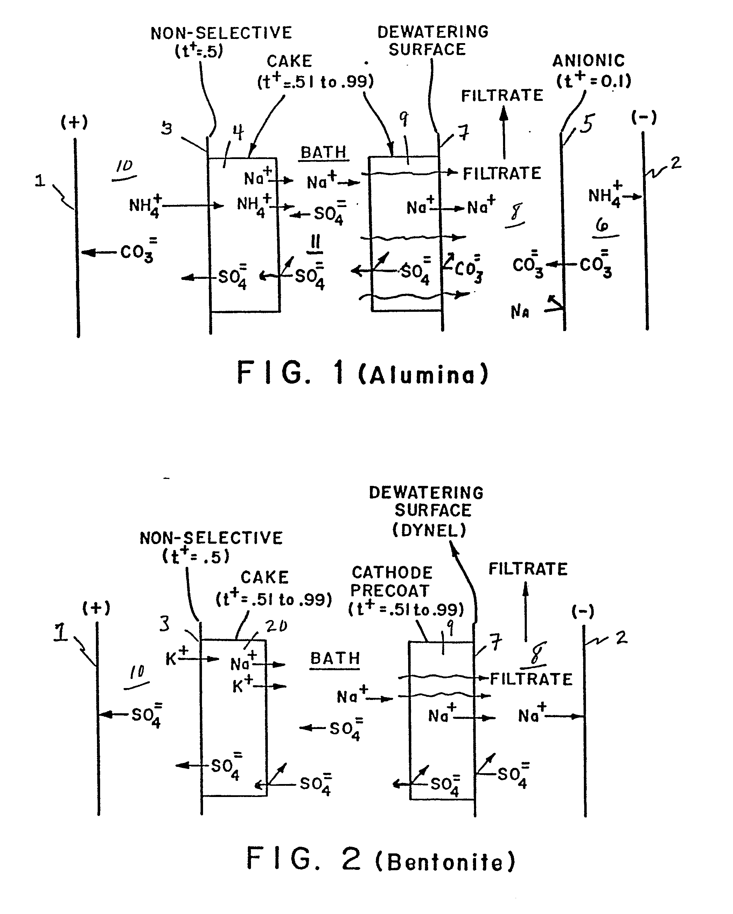

Referring now to Figure 1, an EAVF device is provided having an anode element 1 and a cathode element 2. Non-ion selective membrane 3 is disposed around anode 1 defining an electrolyte chamber filled with electrolyte 10, sometimes referred to as anolyte 10. Cathode element 2 has an anion selective membrane 5 disposed around it forming an electrolyte chamber between cathode element 2 and membrane 5, filled with electrolyte 6, sometimes referred to as catholyte 6. Furthermore, a dewatering surface 7, such as a filter cloth (Dynel, Polypropylene, etc.), microporous membrane, or ultrafiltration membrane is disposed about the anion selective membrane 5 forming there-between a filtrate chamber 8. The chamber defined by the anode non-selective membrane 3 and the dewatering surface 7 is called the bath chamber 11 and is filled with feed material containing liquid, dissolved ions, suspended solids and other materials. In this figure, the dissolved ions are sodium and sulfate, and the suspended solids are alumina. Filtrate chamber 8 is kept at a reduced pressure relative to bath 11 by a vacuum source such that filter cake 9 forms on the dewatering surface 7. When electric current is passed between anode 1 and cathode 2, an alumina cake 4 is electrophoretically deposited on non-selective membrane 3. Alumina cake 4 has an initial concentration of sodium ions and sulfate ions which are carried with the solids from the bath. Please note that filter cake 9 appears to be the same size as anode cake 4 for representational purposes only. In most cases, filter cake 9 is actually a thin film, substantially smaller than anode cake 4.

The electrolyte in Figure 1 is ammonium carbonate . $(NH_4)_2CO_3$. During operation, electric current passes between electrodes. The electric current passes through the electrolyte, membranes, cakes, and bath by transporting ions.

The rate at which specific ions pass depend on the externally applied current, the ionic composition of the conducting phase, the valence of the ions, the ion mobility, and the boundary conditions which impose constraints on the ions due to conservation of charge. The electric field between anode 1 and cathode 2 causes positive ions to move towards the cathode 2 and negative ions to move towards the anode 1. If the positive ions in the field are of the same valence and mobility as the negative ions, then half the current will be carried by the positive ions moving towards the cathode 2 and half the current will be carried by the negative ions moving towards the anode 1. In Figure 1, the positive ions are monovalent and the negative ions are divalent. Thus, if there were no other constraints on the system, twice as many positive ions would move (or they would move twice as fast) as negative ions. There are however five discontinuities (non-selective membrane 3, anode cake 4, bath 11, filter cake 9, and anionic membrane 5) which moderate the ion transfer. Those discontinuities with ion transport numbers (t+) other than 0.5 preferentially transport ions of one charge. Anionic membrane 5, for instance will transport 90% of the current via negative (carbonate) ions. Charge neutrality is maintained in the catholyte 6 because of the electrode reaction (not shown) which generates hydroxide. As long as the concentration of carbonate remains substantially higher than the hydroxide concentration, carbonate transfer will predominate. Filter cake 9 shows the negative ions being repelled and transported at the same time. The degree of transport of the negative ions will be determined by the transference number of the deposited cake. In this case the transference number is greater than $t^+ = 0.51$, therefore the cake will prefer to pass positive ions. Sodium ions from the bath will therefore pass through the filter cake 9 and accumulate in the filtrate 8. Because of charge neutrality, there will be twice as many sodium ions transported due to the passage of electric current into the filtrate 8 as carbonate ions. There may also be sodium sulfate transported from the bath 11 hydraulically through the filter cake 9 pores into the filtrate 8.

The anode cake 4 is also restricting the passage of negative ions, while preferring the transport of positive ions. As in the filter cake 9 the degree of negative ion transport will depend on the cakes transference number. This means that the primary current transport through the bath 11 and cakes 4 and 9 are with positive ions. Positive ions passing into the anode cake 4, however, are ammonium ions from the anolyte 10. Ion passage through anode cake 4 is predominantly by electro-osmosis. Thus, for every ion of ammonium passing into the cake, one ion of sodium passes from the cake into the bath. The anode cake 4 is depleted in sodium, while having a corresponding increase in ammonium ions. The non-selective membrane 3 prevents bulk hydraulic flow from the anolyte 10 into the cake 4. Indeed, there may even be some dialysis of the cake as negative ions are transported through the non-selective membrane 3 into the anolyte 10. Should it be desirable to displace the sodium ions of cake 4 with a different cation, or combination of cations fro the anolyte 10, then the composition of that anolyte 10 can be adjusted accordingly.

Figure 2 describes the reaction when solids of suspension of bentonite clay are deposited as a cake 20 on non-ion selective membrane 3 at anode 1. According to Figure 2, the electrolyte used at the anode structure is potassium sulfate ($K_2SO_4$), whereby potassium ions from the electrolyte solution 10 may be transported across the non-ion selective membrane 3 into cake 20 thereby displacing sodium ions from cake 20 into the bath. Sodium ions are removed as filtrate via filtrate chamber 8. Sulfate is also removed from the cake (dialysis) due to the non-ion selective properties of membrane 3 such that the sulfate is transported across membrane 3 into electrolyte solution 10. As in Figure 1, the transport of the negative ion from the bath 11 to cake 9 or 20 will be depended upon the transference number of the cake 9 or 20.

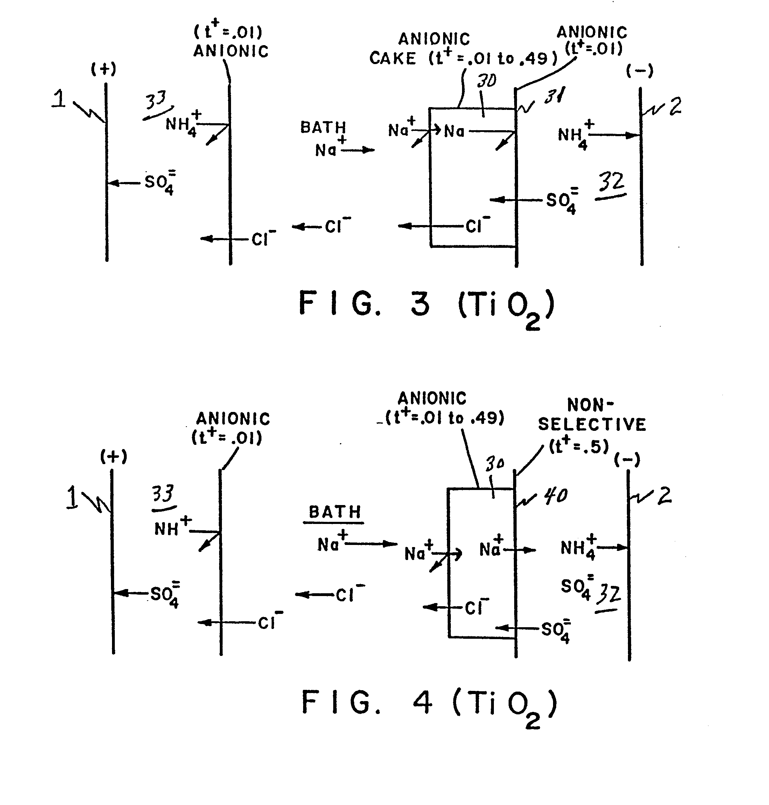

Figure 3 describes the formation of a titanium dioxide cake 30 on an anion selective membrane 31 at cathode 2. According to Figure 3, an electrolyte solution of ammonium sulfate $(NH_4)_2SO_4$ is

supplied in the catholyte chamber 32 such that sulfate ions may be transported across the anion selective membrane 31 to displace chloride ions from cake 30. The chloride ions are thereafter removed along with the electrolyte in anolyte chamber 33. If it is desirable to remove both sodium ions and chloride ions from the titanium dioxide cake formed at the cathode, a non-ion selective membrane 40, as shown in FIG. 4, may be supplied such that sulfate ions from the ammonium sulfate electrolyte may displace chloride ions from cake 30 and also permit the transporting of sodium ions from the cake into catholyte chamber 32. The transference number of the cake 30 determines the transport of positive ions from the bath to the cake 30.

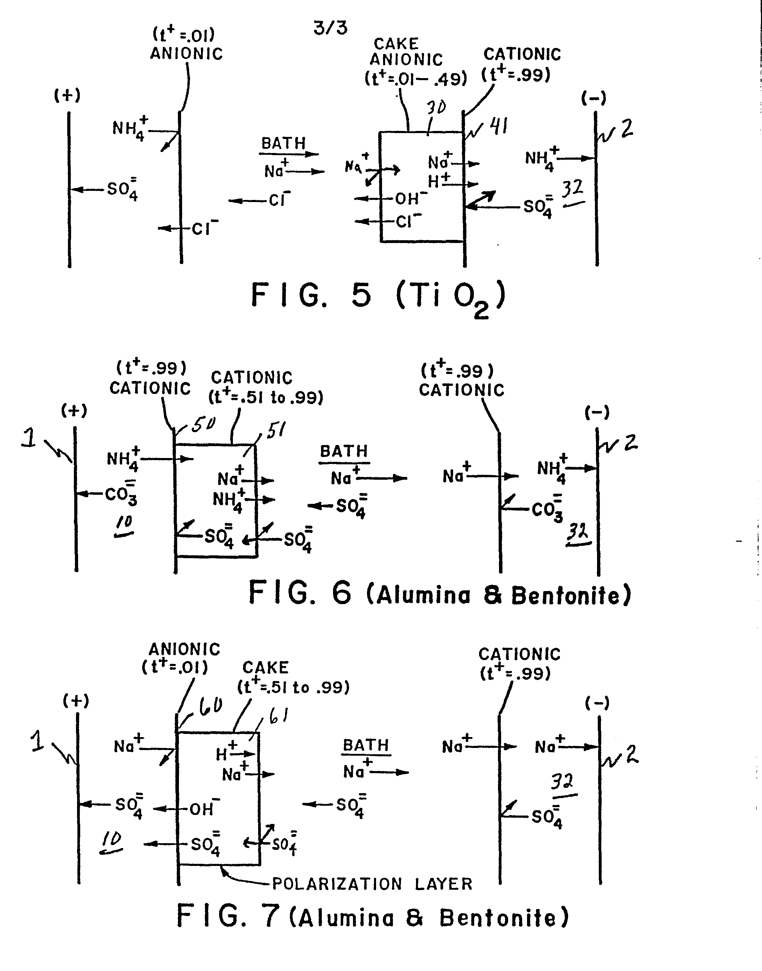

Figure 5 also relates to the formation of a cake 30 of titanium dioxide at cathode 2 but utilizes a cation selective membrane 41 such that sodium ions are removed from cake 30 into catholyte chamber 32. In this instance, sulfate ions in the catholyte chamber 32 cannot be transported across membrane 41 in instances where it is desirable that the cake not contain such sulfate ions. The transport of the positive ion from the bath 11 to cake 30 will be determined by the transference number of cake 30.

Figure 6 demonstrates the use of a cation selective membrane 50 at anode 1 whereby a cake of solids of suspension 51 is formed at the cation selective membrane 50 which permits ammonium ions from electrolyte 10 to transport across membrane 50 into cake 51 thereby displacing the sodium ions from cake 50. The negative ion transport from bath 11 to cake 51 will be determined by the transference number of cake 51.

Finally, Figure 7 depicts the use of an anion selective membrane 60 about anode 1 such that the formation of a cake 61, for example alumina or bentonite, may have sulfate ions removed therefrom by allowing sulfate ions from the cake to be transported across the anion selective membrane 60 into electrolyte 10. Furthermore, in utilizing a sodium sulfate electrolyte 10 the anion selective membrane does not permit sodium ions from electrolyte 10 to be transported into the cake, such that the sodium ions in cake 61 should be attracted towards cathode element 2, thereby reducing the sodium ion concentration in cake 61 as well. The negative transport from bath 11 to cake 61 will be determined by the transference number of cake 61.

Example 1:

In dewatering a cake of alumina in accordance with the schematic representation of Figure 1, a hydraulically impervious, non-ion selective membrane having a transfer number of approximately 0.5 is applied at the anode forming an anolyte chamber containing $(NH_4)_2CO_3$ as the electrolyte. This EAVF device was used to treat Alumina with the following results:

13

TABLE 1 (Alumina)

| | Initial (Na$^+$ Conc./PPM) | Final (Na$^+$ Conc/PPM) |
|---|---|---|
| Cake | – | 2 |
| Bath | 86 | 21 |
| Filtrate | 150 | 78 |

The initial concentration in this test of sodium ions was 86 ppm of sodium ions in the suspension of solids. After the cake formed there was sufficient displacement of the sodium ions from the cake by incoming ammonium ions of the electrolyte solution across the non-ion selective membrane. The sodium ion concentration in the resultant cake is only 2 ppm. Furthermore, sodium concentration in a fixed bath which initially had a sodium ion concentration of 86 ppm was also reduced substantially to about 21 ppm.

Example 2:

The apparatus described in Figure 2 was utilized with a suspension of solids of bentonite clay and a hydraulically impervious, non-ion selective membrane (Dorr-Oliver's PB-300 membrane) at the anode. A titanium anode with a noble metal coating was used having an anolyte solution of either $K_2SO_4$ or $Na_2SO_4$. The electrode gap was set at 1 inch and 20 amps per foot

14

square of electric field was caused across the electrodes for approximately 6 hours.

### TABLE 2 (Bentonite)

| | $Na_2SO_4$ | | $K_2SO_4$ | |
|---|---|---|---|---|
| | Initial | End | Initial | End |
| cake solids | - | 17 | - | 22 |
| cake rate | | | | |
| dry lbs/ft$^2$-hr | - | 3.2 | - | 2.9 |
| ppm Na$^+$ cake | - | 8,714 | - | 1,469 |
| ppm Na$^+$ filtrate | - | 798 | - | 679 |
| ppm Na$^+$ bath | 12,000 | 12,231 | 11,000 | 11,755 |
| ppm K$^+$ cake | - | 1,585 | - | 11,441 |
| ppm K$^+$ filtrate | - | 31 | - | 113 |
| ppm K$^+$ bath | 2,358 | 2,495 | 2,461 | 4,303 |

In the case where $Na_2SO_4$ was used as the anolyte there was an initial concentration of sodium ions in the bath of 12,000 ppm and the cake formed of bentonite having 8,714 ppm of sodium ions upon removal. Furthermore, sodium ion concentration in the bath also increased to 12,231 ppm indicating that the use of $Na_2SO_4$ did little to reduce the sodium ion concentration in the bentonite cake.

The same test was run except that the anolyte was changed to $K_2SO_4$. The initial concentration of sodium in the bath of suspended solids was 11,000 ppm and the resultant cake of bentonite formed by the EAVF device only contain a sodium ion concentration of 1,469 which is substantially less than the sodium ion concentration initially in the bath. Concentration of potassium ions in the cake increased from 0 ppm to 11,441 ppm due to the displacement of the sodium ions by the potassium ions. The aforementioned tests clearly demonstrate the displaceability of the sodium ion concentration in the cake formed at the anode by the use of a non-ion selective membrane and a selected anolyte, such as $K_2SO_4$. It can also be noted that the use of $K_2SO_4$ as the anolyte resulted in a much higher percent solid cake, i.e. approximately 22% compared to 17%.

Example 3:

Referring to Figure 3 wherein titanium dioxide is deposited as a cake on anion selective membrane 31 and wherein $(NH_4)_2SO_4$ is the catholyte solution the following results occur in accordance with the present invention. The initial feed into the bath of suspension of solids (titanium dioxide) had a sodium ion concentration of 4,340 ppm and a chloride ion concentration of 11,220 ppm. Since an anion selective membrane 31 is applied at the cathodic structure where the cake of titanium dioxide solids from suspension are deposited, the sulfate ions from the catholyte solution are permitted to be transported across the anion selective membrane to displace the chloride ions from the cake resulting in a cake of 50% solids having a substantially reduced chloride ion concentration of 4,890 ppm and a slightly reduced sodium ion concentration of 3,960 ppm. The substantial reduction in chloride ion concentration is due to the use of an anion selective membrane and a sulfate containing catholyte.

Example 4:

When a non-ion selective membrane 40, as shown in Figure 4, is applied as a membrane wall surrounding cathode 2 for deposition of titanium dioxide and wherein $(NH_4)_2 SO_4$ is utilized as the electrolyte the following results occur. Feed of titanium dioxide containing sodium and chloride ions having an initial concentration of 4,340 ppm and 11,200 ppm, respectively, forms a cake on the non-ion selective membrane 40. Due to the properties of membrane 40 sulfate ions from the catholyte are permitted to be transported across membrane 40 into the cake of titanium dioxide to displace chloride ions therefrom and simultaneously sodium ions are permitted to be transported across the non-ion selective membrane into the catholyte. The use of the combination of the non-ion selective membrane together with the selected catholyte results in a substantial reduction in the cake of both sodium ion and chloride ion concentrations, i.e. 1,887 and 929, respectively. Thus use of a non-ion selective membrane permits displacement of chloride ions as well as removal of sodium ions from the titanium dioxide cake, whereas the application of an anionic membrane for titanium dioxide, deposition was able to maintain the sodium ion concentration while reducing the chloride ion concentration due to its permeability characteristics.

Example 5:

A cation selective membrane 41, as shown in Figure 5, was disposed about cathode 2 for deposition thereon of a titanium dioxide cake. An electrolyte of $(NH_4)_2SO_4$ was placed in catholyte chamber 32. The initial feed into the bath was a titanium dioxide solution of 37% solids having a sodium ion concentration of 4,340 ppm and a chloride ion concentration of 11,200 ppm. Use of a cation selective membrane does not permit the sulfate ions from the catholyte chamber to be transported into the cake for displacing of chloride ions. However, it does permit the removal of sodium ions from the cake resulting in a substantial reduction in the sodium ion concentration of the cake to about 1,106 ppm. Surprisingly, the chloride ion concentration due to attraction to the anode was also reduced to about 2,347 ppm resulting in a cake having 59% solids.

Example 6:

In this test a cation selective membrane was disposed about the anode for deposition of alumina and also bentonite in separate tests. The alumina dispersion had 8.69% solids and a sodium content of 1013ppm. Using $(NH_4)_2CO_3$ as the anolyte, a cake of 84% solids with a 380ppm sodium content, approximately 37.5% of the initial value was produced.

Using $Na_2SO_4$ as the anolyte would produce a 85% solid product with a sodium content of 1525ppm. Thus, it confirms that the use of the $(NH_4)_2CO_3$ anolyte is much more preferable should it be desirable to reduce the sodium ion concentration in the cake of alumina.

A bentonite feed into the bath was 3.6% solids having a sodium ion concentration of 49,888 and the anolyte used was $K_2SO_4$. In this instance there was a substantial reduction of sodium ion concentration in a cake to about 3,900 ppm. The potassium ion concentration in the cake increased from 0 to about 24,511 ppm. This was a direct result from the potassium ion and the anolyte being transported across the cation selective membrane to displace the sodium anions in the cake of bentonite.

Example 7:

In this test an anion selective membrane was disposed about the anode 1 for deposition of cakes of alumina and bentonite.

In the case of alumina, $Na_2SO_4$ anolyte was placed in anolyte chamber 10 and the initial concentration of sodium ions in the feed was 1,013 ppm. The resultant cake had a sodium ion concentration of only 78 ppm thus the sodium ion concentration was reduced due to the polarization caused by sulfate ions being transported across the anion selective membrane.

In the case of bentonite, $K_2SO_4$ anolyte was used and the initial feed of bentonite had a sodium ion concentration of 49,888 ppm and the resultant cake contained a sodium ion concentration of 1,589 ppm.

It is also possible according to the present invention to have the following cathodic and anodic membrane structures in combination in an electrofilter device to provide any required changes in the ionic species in a given feed stream.

| DEPOSITION ELECTRODE | DEPOSITION MEMBRANE | DEWATERING ELECTRODE MEMBRANE |
|---|---|---|
| Anode | Anion Selective (1) | Cation Selective (2) |
| Anode | Anion Selective (1) | Non-ion Selective |
| Anode | Anion Selective (1) | Anion ion Selective |
| Anode | Non-ion Selective | Cation Selective (2) |
| Anode | Non-ion Selective | Non-ion Selective |
| Anode | Non-ion Selective | Anion Selective |
| Anode | Cation Selective | Cation Selective (2) |
| Anode | Cation Selective | Non-ion Selective |
| Anode | Cation Selective | Anion Selective |
| Cathode | Anion Selective | Anion Selective (2) |
| Cathode | Anion Selective | Non-ion Selective |

| DEPOSITION ELECTRODE | DEPOSITION MEMBRANE | DEWATERING ELECTRODE MEMBRANE |
|---|---|---|
| Cathode | Anion Selective | Cation Selective |
| Cathode | Non-ion Selective | Anion Selective (2) |
| Cathode | Non-ion Selective | Non-ion Selective |
| Cathode | Non-ion Selective | Cation Selective |
| Cathode | Cation Selective | Anion Selective (2) |
| Cathode | Cation Selective | Non-ion Selective |
| Cathode | Cation Selective | Cation Selective |

(1) forms acid product with lower solid content in comparison to cation or non-ion selective membranes due to polarization effects.

(2) because of polarization layers in the filtrate chamber, ion exchange resin or beads must be present for current to flow.

0241308

CLAIMS

1. Method for displacing selected ions from a cake of solids of suspension deposited on an electrode structure of an electrically augmented vacuum filter apparatus which comprises submerging at least a first electrode structure and a second electrode structure into a suspension of solids, and depositing a cake of said solids of suspension onto a membrane wall of said first electrode structure, said first electrode structure containing therein an electrolyte, characterised in that said membrane wall has ion-permeable characteristics such that ions of said electrolyte solution can pass through said membrane wall into said cake deposited thereon, thereby displacing selected ions from said cake into the bath of suspended solids.

2. The method according to claim 1, wherein said first electrode structure is anodic and said second electrode structure is cathodic.

3. The method according to claim 2, wherein said membrane wall of said first electrode structure is a cation selective membrane or a non-ion selective membrane.

4. The method according to claim 3, wherein said membrane walls are either hydraulically permeable or impermeable.

5. The method according to claim 2, 3 or 4, wherein said electrolyte solution is one selected from the group consisting of: $(NH_4)_2 \cdot CO_3$; $K_2SO_4$; $Na_2 SO_4$; any salt; and any combination of electrolytes.

6. The method according to claim 2, 3, 4 or 5, wherein said cake deposited onto said membrane wall of said first electrode is alumina together with sodium ions, and the electrolyte solution contains $NH_4^+$ and/or $K^+$, whereby the $NH4^+$ and/or $K^+$ ions are transported across said membrane wall into said cake of alumina thereby displacing said sodium ions from said cake.

7. The method according to claim 2, 3, 4 or 5, wherein said cake deposited onto said membrane wall of said first electrode is bentonite with sodium ions, and the electrolyte contains $K^+$ and/or $NH_4^+$, whereby the $K^+$ and/or $NH_4^+$ ions are transported across said membrane wall into said cake of bentonite thereby displacing said sodium ions from said cake whereby the percent solids of said cake of bentonite is increased.

8. The method according to claim 1, wherein said first electrode structure is cathodic and said second electrode structure is anodic.

9. The method according to claim 8, wherein said membrane wall of said first electrode structure is an anion selective membrane or a non-ion selective membrane.

10. The method according to claim 8 or 9, wherein said cake deposited onto said membrane wall of said first electrode is $TiO_2$ with chloride ions, and the electrolyte contains $SO_4^=$, whereby the sulfate ions are transported across said membrane wall into said cake of $TiO_2$ thereby displacing said chloride ions from said cake.

11. A method for removing selected ions from a cake of solids of suspension deposited on an electrode structure of an electrically augmented vacuum filter apparatus which comprises submerging at least a first electrode structure and a second electrode structure into a suspension of solids, and depositing a cake of solids of suspension onto a membrane wall of said first electrode structure, said first electrode structure containing therein an electrolyte solution; characterised in that said membrane wall has ion-permeable characteristics such that selected ions in said cake deposited on said membrane wall can pass through said membrane wall into said electrolyte solution, thereby depleting said cake of the selected ions.

12. The method according to claim 11, wherein said first electrode structure is anodic and said second electrode structure is cathodic.

13. The method according to claim 12, wherein said membrane wall of said first electrode structure is an anion selective membrane.

14. The method according to claim 12 or 13, wherein said cake deposited onto said membrane wall of said first electrode is alumina together with sodium and sulfate ions, and said electrolyte solution is $Na_2SO_4$, whereby the sulfate ions are transported across said membrane wall into said electrolyte solution thereby removing said sulfate ions from said cake.

15. The method according to claim 12 or 13, wherein said cake deposited onto said membrane wall of said first electrode is bentonite together with sodium and sulfate ions, and said electrolyte solution is $Na_2SO_4$, whereby the sulfate ions are transported across said membrane wall into said electrolyte solution thereby removing said sulfate ions from said cake.

16. The method according to claim 11, wherein said first

5

electrode is cathodic and said second electrode is anodic.

17. The method according to claim 16, wherein said membrane wall of said first electrode structure is a cation selective membrane.

18. The method according to claim 16 or 17, wherein said cake deposited onto said membrane wall of said first electrode is $TiO_2$ together with sodium and hydroxide ions, and said electrolyte contains $NH_4^+$ ions, whereby the sodium ions are transported across said membrane wall into said electrolyte solution thereby removing said sodium ions from said cake.

19. The method according to any preceding claim, wherein there are a series of first electrodes disposed intermittently between a series of said second electrodes.

20. An apparatus for performing the method according to Claim 1, wherein said membrane wall of said first electrode structure is at least one selected from: anion selective membranes, non-ion selective membranes and cation selective membranes; and the said second electrode structure has a membrane wall which is at least one selected from: anion selective membranes, non-ion selective membranes and cation selective membrane.

6

21. An apparatus acording to Claim 20, wherein said first electrode structure is anodic and said second electrode structure is cathodic.

22. An apparatus according to Claim 21, wherein said membrane wall of said second electrode structure is a cation selective membrane and an ion exchange material is disposed in said filtrate chamber.

23. An apparatus according to Claim 20, wherein said first electrode structure is cathodic and said second electrode structure is anodic.

24. An apparatus according the Claim 23, wherein said membrane wall of said second electrode structure is an anion selective membrane and an ion exchange·material is disposed in said filtrate chamber.

25. An apparatus according to any of Claims 20 to 24, wherein said second electrode structure includes a filtrate chamber formed by a filter medium disposed about said membrane wall of said second electrode structure.

FIG. 1 (Alumina)

FIG. 2 (Bentonite)

0241308

F I G. 3 (Ti$O_2$)

F I G. 4 (Ti$O_2$)

0241308

3/3

F I G. 5 (Ti O$_2$)

F I G. 6 (Alumina & Bentonite)

F I G. 7 (Alumina & Bentonite)

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| Y | US-A-4 536 268 (E.R. LAWHORNE)<br><br>* Abstract; column 1, lines 7-21; column 1, line 54 - column 2, line 57 * | 1,8,9, 11,16, 18,20, 23 | B 01 D 57/02<br>B 01 D 35/06<br>B 01 D 13/02 |
| A | | 10 | |
| Y | US-A-4 312 729 (W.R. WILLS)<br>* Abstrct; figures; column 2, line 19 - column 3, line 68 * | 1,11 | |
| A | | 2-4,12 ,13,20 | |
| | | | TECHNICAL FIELDS SEARCHED (Int. Cl.4) |
| Y | FR-A-2 538 551 (ASAHI KASEI KOGYO KABUSHIKI KAISHA)<br><br>* Abstract; page 5, lines 22-28; page 20, line 10 - page 22, line 14; figures 1,2 * | 8,9,16 ,18,20 ,23 | B 01 D<br>B 28 C<br>C 09 C |
| A | | 1-4,11 -13,17 | |
| | --- -/- | | |

The present search report has been drawn up for all claims

| Place of search | Date of completion of the search | Examiner |
|---|---|---|
| THE HAGUE | 29-06-1987 | VAN IDDEKINGE R.E. |

European Patent Office

**EUROPEAN SEARCH REPORT**

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| A,D P | EP-A-0 202 955  (DORR OLIVER) <br><br> * Abstract; page 12, line 6 - page 15, line 17; claims 1,2,12-14; figures 2-4 * | 1,8,9, 11,16, 17,20, 23,25 | |
| A | CHEMICAL ABSTRACTS, vol. 66, no. 2, 9th January 1967, page 419, abstract no. 3887e, Columbus, Ohio, US; V.L. MAKSIMOV et al.: "Apparatus for the electro-osmotic determination of electrokinetic potential in pigment pastes", & LAKOKRASOCH. MATER. IKH PRIMEN. 1966(4), 59-60 | 10,18 | |

TECHNICAL FIELDS SEARCHED (Int. Cl.4)

The present search report has been drawn up for all claims

| Place of search | Date of completion of the search | Examiner |
|---|---|---|
| THE HAGUE | 29-06-1987 | VAN IDDEKINGE R.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82